# EUROPÄISCHE PATENTANMELDUNG

(11) **EP 1 041 368 A1**
(43) Veröffentlichungstag der Anmeldung: **04.10.2000**
(21) Anmeldenummer: 00810238.6
(22) Anmeldetag: 21.03.2000
(51) Int. Cl.: G01F 11/26

(54) **Dosierflasche für Fixdosierungen von Flüssigkeiten**

(30) Priorität: 30.03.1999 CH 60199; 30.03.1999 CH 60299
(71) Anmelder: Createchnic AG, 8309 Nürensdorf (CH)
(72) Erfinder: Loertscher, Ulrich, 8006 Zürich (CH)
(74) Vertreter: Felber, Josef

(57) **Zusammenfassung**

Die Dosierflasche ist einstückig aus Kunststoff im Blas- oder Spritzverfahren herstellbar. Mittels ein oder mehrerer Quetschnähte (6) oder mittels einer Einschnürung der Flaschenwand ist eine am Flaschenboden angeordnete Dosierkammer (3) mit Durchgangsöffnung (4) zum Flascheninnern abgetrennt. Sie kommuniziert mit einem Ausgussrohr (5), das im Flascheninnern zum Ausguss (7) führt, derart, dass bei jedem Kippen der Flasche aus der aufrechten Lage um 90°bis 180° in eine Ausgiesslage einzig der Inhalt der Dosierkammer (3) ausgiessbar ist.

## Beschreibung

Die Erfindung betrifft eine preisgünstige Dosierflasche für das Dosieren von immer gleich grossen Mengen von Flüssigkeiten. Im Innern des Flaschenkörpers ist eine Dosierkammer gebildet, die mit der Flaschenöffnung kommuniziert. Wird die Flasche gekippt, entleert sich einzig die Dosierkammer, ohne dass weitere Flüssigkeit vom Innern der Flasche in diese Dosierkammer nachfliesst. Wird die Flasche in die Ausgangslage zurückgekippt, füllt sich die Dosierkammer wieder auf.

Oft soll aus einer Flasche eine bestimmte, immer gleich bleibende Menge Flüssigkeit abgegeben werden. Zum Beispiel trifft das zu für Reinigungsmittel, Waschmittelzusätze, Pflanzenschutzmittel, Dünger, Sirupe, Mundwässer usw. Meist wird die Dosierung über einen gesonderten Messbecher vorgenommen, oder es wird der Flaschenverschluss als Messbecher benutzt. Die Nachteile in dieser Art und Weise zu dosieren, bestehen darin, dass erstens die Handhabung des Dosierens umständlich ist, indem man zwei Hände dazu braucht, zweitens die Genauigkeit der Dosierung vom Anwender abhängig ist und daher oft zu wünschen übrig lässt, und drittens die Gefahr des Verschüttens von Flüssigkeit beim Dosieren besteht.

Ausserdem muss ein Messbecher nach jeder Dosierung gespült werden, sonst wird der Flaschenhals nach Aufschrauben des als Messbecher dienenden Deckels auf seiner Aussenseite von zurücklaufender Flüssigkeit verschmiert. Speziell bei Konzentraten ist die Gefahr einer Unter- oder Überdosierung gegeben, da in der Eile oder je nach Temperament und Geschicklichkeit des Benützers ein Messbecher unter oder über die Dosiermarkierung gefüllt wird. Muss die dosierte Flüssigkeit zum Beispiel in einen Einfüllstutzen hineingegossen werden, der mit einem Deckel oder Klappdeckel versehen ist, so fehlt dem Anwender eine Hand, will er ab der Flasche eine dosierte Menge in diesen Einfüllstutzen giessen. Mit einer Hand muss er nämlich den Deckel oder Klappdeckel des Einfüllstutzens halten, und somit steht für das Dosieren und Eingiessen nur noch eine Hand zur Verfügung. Es ist daher unumgänglich, dass der Anwender zunächst mit einer Hand die Flasche hält, mit der anderen den Messbecher abschraubt und die Dosierung vornimmt, und hernach die Flasche irgendwo abstellt, um diese eine Hand zum Öffnen oder Offenhalten des Einfüllstutzens frei zu haben.

Es gibt im Stand der Technik allerdings Lösungen, um eine Dosierung ab einer Flasche handlicher vorzunehmen, indem solche Flaschen mit Dosierkammern versehen sind. Derartige Flaschen beruhen denn auch auf dem gleichen physikalischen Prinzip wie jene gemäss der vorliegenden Erfindung.

Die US-Patentschrift US 3'107'031 (J.D. Adams) zeigt zum Beispiel eine Dosierflasche, bei welcher ein L-förmiges Rohr in das Flascheninnere eingeführt ist, dessen unteres, infolge der L-Form quergestelltes Ende die eigentliche Dosierkammer bildet. Diese Lösung bringt aber den Nachteil mit sich, dass das Rohr aufgrund seiner Form nicht in eine fertige Flasche eingeführt werden kann. Es müssen daher zwei die Flasche bildende Halbschalen unter Einschluss dieses L-förmigen Rohres zusammengeklebt oder zusammengeschweisst werden. Das ist allerdings eine teure Lösung. Wenn ausserdem das Niveau des Flascheninhalts den oberen Rand der Dosierkammer erreicht hat, das heisst den oberen Rand des liegend in der Flasche angeordneten Rohrteils der L-Form, so werden die Dosierungen immer kleiner, da auf dem Niveau der Dosierkammer jedesmal noch Flüssigkeit aus demjenigen unteren Teil der Flasche aufgenommen wird, der sich ausserhalb der Dosierkammer befindet. Das führt auch dazu, dass die Flasche nicht vollständig entleert werden kann. Eine Restmenge bleibt immer ausserhalb der Dosierkammer liegen.

Die Patentschrift GB 407'854 andrerseits zeigt einen Dosierbehälter in Form eines Blechkanisters mit einem darin eingefügten Rohr. Die Dosierkammer wird durch eine Abtrennung gebildet, die mit einem zweiten Boden realisiert ist. Es handelt sich bei diesem Blechkanister um eine nach heutigen Begriffen komplizierte, teure Konstruktion, die ausserdem für grössere Mengen von Flüssigkeiten und auch grössere Dosiermengen gedacht war.

Die Aufgabe der Erfindung ist es, die oben angeführten Nachteile zu beheben und eine Dosierflasche zu schaffen, welche durch ihre einfache Konstruktions- und Herstellweise äusserst kostengünstig herstellbar ist, und die ein sicheres und bequemes, einhändig vorzunehmendes Dosieren einer festen, also fixen Dosiermenge erlaubt.

Diese Aufgabe wird gelöst von einer Dosierflasche für Fixdosierungen, die sich dadurch auszeichnet, dass die Flasche einstückig aus Kunststoff im Blas- oder Spritzverfahren herstellbar ist, wobei mittels ein oder mehrerer Quetschnähte oder mittels einer Einschnürung der Flaschenwand eine am Flaschenboden angeordnete Dosierkammer mit Durchgangsöffnung zum Flascheninnern abgetrennt ist, welche mit einem Ausgussrohr kommunziert, das im Flascheninnern zum Ausguss führt, derart, dass bei jedem Kippen der Flasche aus der aufrechten Lage um 90°bis 180° in eine Ausgiesslage einzig der Inhalt der Dosierkammer ausgiessbar ist.

Vorteilhafte Ausführungen dieser Dosierflasche sind in den Zeichnungen in verschiedenen Ansichten dargestellt. Diese Ausführungen werden nachfolgend im einzelnen beschrieben und ihre Funktion wird erläutert.

Es zeigt:
- Figur 1:: Ein Aufriss von der Schmalseite einer ersten Ausführung der Dosierflasche mit dem auf der einen Seite angeordneten Ausguss;
- Figur 2:: Ein Längsschnitt durch die Dosierflasche längs der Linie I-I von Figur 1, also in einer Ansicht auf ihre Breitseite;
- Figur 3:: Einen Querschnitt durch die Dosierflasche längs der Linie II-II in Figur 2;
- Figur 4:: Einen Querschnitt durch die Dosierflasche längs der Linie III-III in Figur 2;
- Figur 5:: Einen Längsschnitt durch das obere Ende der Dosierflasche, die neben dem Ausguss mit einem separaten Einfüllstutzen ausgerüstet ist;
- Figur 6:: Einen Längsschnitt durch das obere Ende einer Dosierflasche, die neben dem Ausguss mit einer separaten Entlüftungsöffnung ausgerüstet ist;
- Figur 7:: Ein Aufriss von der Schmalseite einer zweiten Ausführung der Dosierflasche mit dem auf der einen Seite angeordneten Ausguss;
- Figur 8:: Ein Längsschnitt durch die Dosierflasche längs der Linie I-I von Figur 7, also in einer Ansicht auf ihre Breitseite;
- Figur 9:: Einen Querschnitt durch die Dosierflasche längs der Linie II-II in Figur 8;
- Figur 10:: Einen Querschnitt durch die Dosierflasche längs der Linie III-III in Figur 8.

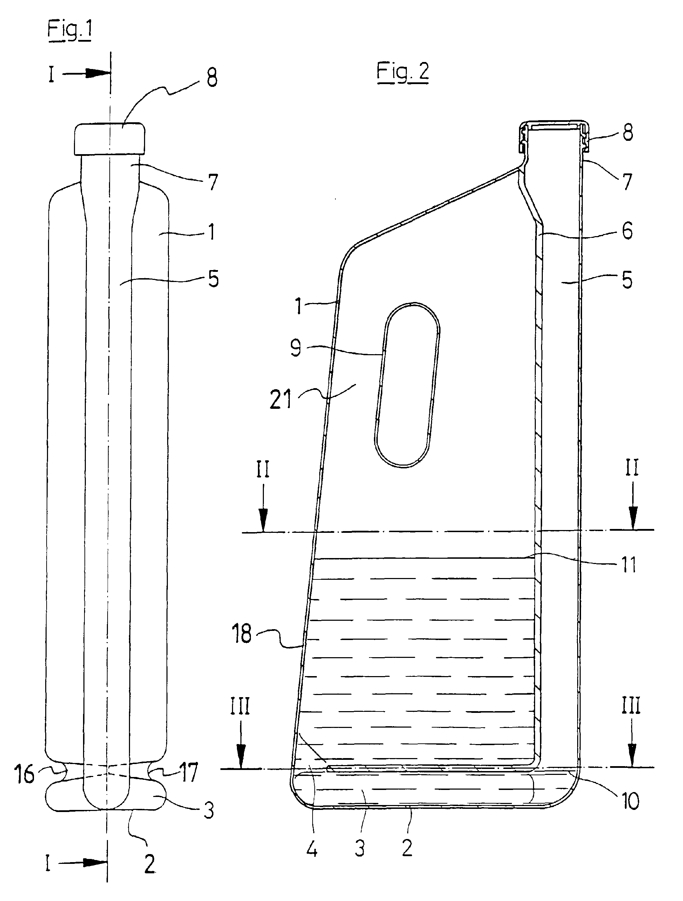

Die Figur 1 zeigt eine Ansicht einer bevorzugten Ausführung der Dosierflasche 1, wobei diese hier von einer Schmalseite her gesehen gezeigt ist, längs welcher sich das Ausgussrohr 5 erstreckt. Über dem Boden 2 einer an sich beliebig geformten und auch beliebig gross dimensionierten Flasche 1 aus Kunststoff befindet sich eine Dosierkammer 3, deren Grösse je nach der gewünschten, bei jeder Kippbewegung auszugiessenden Fixdosierung festgelegt wird. Die Dosierkammer 3 wird durch eine Quetschung vom übrigen Flascheninhalt abgetrennt, wobei diese Quetschung hier in der Zeichnung von den beiden Seiten aus erfolgt, sodass eine Quetschnaht entsteht. Durch ein erneutes Blasen von zwei weitere Blaspunkten aus entstehen dann in an sich blastechnisch bekannter Weise die beiden Stützwände 16,17. Die Dosierkammer 3 bildet sodann gewissermassen einen Flaschenfuss mit ebener Unterseite. Das an die Dosierkammer 3 angeschlossene Ausguss- oder Entleerungsrohr 5, welches seinerseits mittels einer in der Zeichnung vertikal verlaufenden Quetschnaht vom restlichen Falscheninhalt abgetrennt ist, führt zur Flaschenöffnung 7, die mit einem Deckel in Form einer Gewindekappe oder eines Klappverschlussdeckels 8 verschlossen ist.

Die Figur 2 zeigt eine Schnittansicht längs der Linie I-I in Figur 1. Die Quetschnaht 6, die durch eine Nachbehandlung der im Extrudier-Blasverfahren in Polyethylen PE vorgeformten Flasche 1 entsteht, trennt die Dosierkammer 3, das Entleerungsrohr 5 und die Flaschenöffnung 7 vom übrigen Flascheninnenraum ab. Die Quetschnaht 6 beginnt bei der Dosierkammeröffnung 4, welche die Verbindung zum Flascheninnenraum bildet. Der Deckel 8 ist ein beliebiger üblicher Schraub- oder Klappverschlussdeckel. Die Flasche weist in diesem Beispiel eine Grifföffnung 9 auf, durch die ein Griffbügel 21 gebildet ist. An diesem Griffbügel 21 kann die Flasche 1 leicht mit einer Hand ergriffen und von der aufrechten Lage in die Ausgiesslage gekippt und jeweils wieder in die aufrechte Lage zurückgeschwenkt werden, wobei jedesmal die Dosierkammer 3 neu gefüllt wird.

Das Niveau 10 in der Dosierkammer 3 steht unabhängig vom aktuellen Füllstand der Flasche 1, der hier mit dem Flüssigkeitsniveau 11 angegeben ist, stets am oberen Rand der Dosierkammeröffnung 4 beziehungsweise am unteren Rand des Entleerungsrohrs 5. Der sich beim Nachlaufen von Flüssigkeit aus dem Flascheninnern in die Dosierkammer 3 bildende Unterdruck oberhalb des Füllstandes 11 der Flasche 1 verhindert nämlich ein Aufsteigen des Dosierkammerniveaus 10 im Entleerungsrohr 5. Wird die Flasche 1 um einen Winkel von 90° bis 180° in Richtung Flaschenöffnung 7 gekippt, im Bild also in Richtung des Uhrzeigersinns, so fliesst der Inhalt der Dosierkammer 3 zunächst in das Ausgussrohr 5 und schliesslich durch die Flaschenöffnung 7 aus der dann geöffneten Flasche 1 heraus. Gleichzeitig sammelt sich die noch in der Flasche 1 befindliche Flüssigkeit im oberen Bereich der Flasche 1 an, und es gelangt also keine weitere Flüssigkeit in die Dosierkammer 3 und das Ausgussrohr 5. Schon bei einer Schwenkung der Flasche 1 um wenig mehr als 90° erreicht nämlich das Flüssigkeitsniveau in der Flasche 1 nicht mehr die oben auf der Dosierkammer 3 angebrachte Durchgangsöffnung 4 zu derselben. Wird nun aber die Flasche 1 aus der Ausgiesslage zurück in die aufrechte Lage geschwenkt, so dreht sich die Durchgangsöffnung 4 im Prinzip um die in der Flasche 1 enthaltene Flüssigkeit herum, bis sie in dieselbe eintaucht. Dann aber fliesst Flüssigkeit durch die Durchgangsöffnung 4 nach unten in die Dosierkammer 3, bis das Niveau 10 wieder erreicht ist und somit die Dosierkammer 3 ganz gefüllt ist. Bis dann ist der Druck oberhalb des Flüssigkeitsniveaus 11 in der Flasche 1 soweit abgefallen, dass keine weitere Flüssigkeit in die Dosierkammer 3 zu strömen vermag. Somit kann also die Flasche für jede vorzunehmende Dosierung nach Abschrauben des Deckels 8 bloss in die Ausgiesslage geschwenkt werden, wonach jedesmal die gleiche dosierte Menge an Flüssigkeit ausgegossen wird. Nach Zurückschwenken der Flasche 1 in die aufrechte Lage wird die Dosierkammer 3 jedesmal erneut gefüllt, und zwar immer mit der gleichen Füllung. Das Ausgiessen und Zurückschwenken zwecks erneutem Befüllen der Dosierkammer 3 kann ganz leicht mit einer einzigen Hand erfolgen. Ganz am Schluss, wenn nur noch wenig Flüssigkeit in der Flasche verbleibt, wird die Dosierkammer 3 nicht mehr ganz gefüllt. Einzig die allerletzte Dosierung stimmt somit nicht mehr genau mit der vorgesehenen Dosiermenge überein.

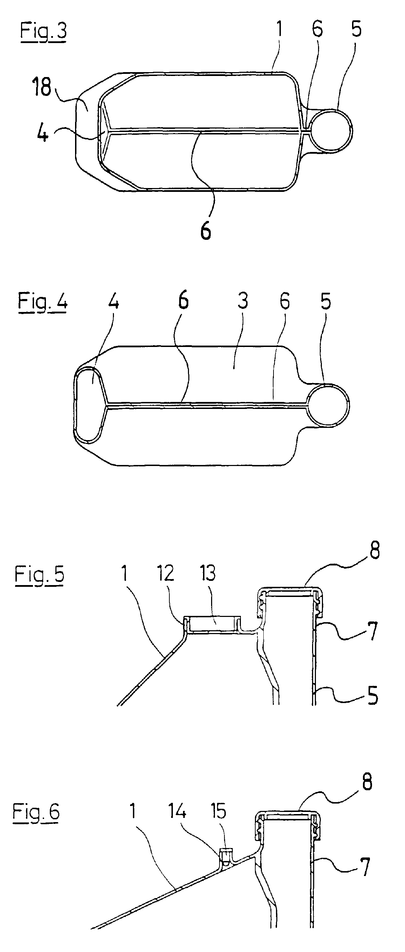

Die Figur 3 zeigt einen Querschnitt durch den Flaschenkörper längs der Linie II-II in Figur 2. Man sieht also einen Querschnitt durch die Flaschenwandung, die Quetschnaht und das Entleerungsrohr 5. Auf der hinteren, im Bild auf der linken Seite erkennt man die Aussenseite 18 der dort schräg nach aussen hin abfallenden Wand der Flasche. Unten, mit Blick gegen den Flaschenboden hin, erkennt man die dichte Quetschnaht 6, mittels welcher die Abtrennung der Dosierkammer 3 verwirklicht ist, sowie links davon einen Teil der Durchgangsöffnung 4 vom Flascheninnern zur Dosierkammer 3.

In Figur 4 ist ein Querschnitt längs der Linie III-III in Figur 2 gezeigt. Der Schnitt erfolgte hier also knapp oberhalb der Dosierkammer 3, genau längs der Mitte der Quetschnahthöhe. Das in dieser Weise gezeigte Gebilde ist ein Behälter mit zwei nach oben gerichteten Öffnungen, nämlich links der Durchgangsöffnung 4 zum Flascheninnern, und rechts der Öffnung, welche in das Ausgussrohr 5 mündet. Die Dosierkammer 3 kann in beliebiger Grösse in das Flascheninnere integriert werden. Im gezeigten Beispiel sind die Volumenverhältnisse so, dass etwa 20 Dosierungen erfolgen können. Auch die Öffnung der Dosierkammer 3, das heisst die Durchgangsöffnung 4 vom Flascheninnern zur Dosierkammer 3, kann in unterschiedlichen Grössen hergestellt werden. Sie soll in Abhängigkeit der Viskosität der Füllflüssigkeit so gewählt sein, dass das Befüllen der Dosierkammer 3 in kurzer Zeit erfolgt, zum Beispiel in 2 bis 5 Sekunden, damit das Ausgiessen von mehrfachen Dosierungen ohne Zeitverzug vonstatten geht.

Die Figur 5 zeigt eine Schnittansicht einer an sich beliebig gross formbaren Einfüllöffnung 12 mit Verschlussdeckel 13. Wird die Flüssigkeit hier eingefüllt, so kann die Flaschenöffnung 7 bereits beim Befüllen der Flasche 1 mit dem Deckel 8 verschlossen sein. Dies hat den Vorteil, dass sich das Entleerungsrohr 5 nicht füllt. Würde es sich nämlich füllen, so müsste sein Inhalt einer genauen Dosis entsprechen, wie anschliessend die Dosismengen, die ab der Dosierkammer 3 ausgegossen werden. Sonst wäre die erste ausgegeossene Dosis nach Öffnen der Flasche 1 ein andere, was natürlich unerwünscht ist. Wenn also die Flasche wie beschrieben über die Einfüllöffnung 12 bei geschlossenem Ausguss 7 befüllt wird, so kann die volle Flasche 1 gar gestürzt werden, und hernach wieder in die aufrechte Lage gebracht werden, ohne dass die Ebenmässigkeit der Dosierungen darunter leidet, das heisst ohne dass die erste dosierte Menge verändert wird.

Die Figur 6 zeigt eine Schnittansicht einer Dosierflasche mit einer Entlüftungsöffnung 14 mit Verschlusszapfen 15. Eine solche Entlüftungsöffnung 14 ist dann nötig, wenn die Flasche durch die Flaschenöffnung 7 befüllt wird, weil die Luft im Flascheninnenraum entweichen können muss. Anstelle des Verschlusszapfens 15 kann die Entlüftungsöffnung 14 nach dem erfolgten Befüllen auch zugequetscht oder verschweisst werden. Möglich ist auch ein einfaches Loch, das zugeklebt wird.

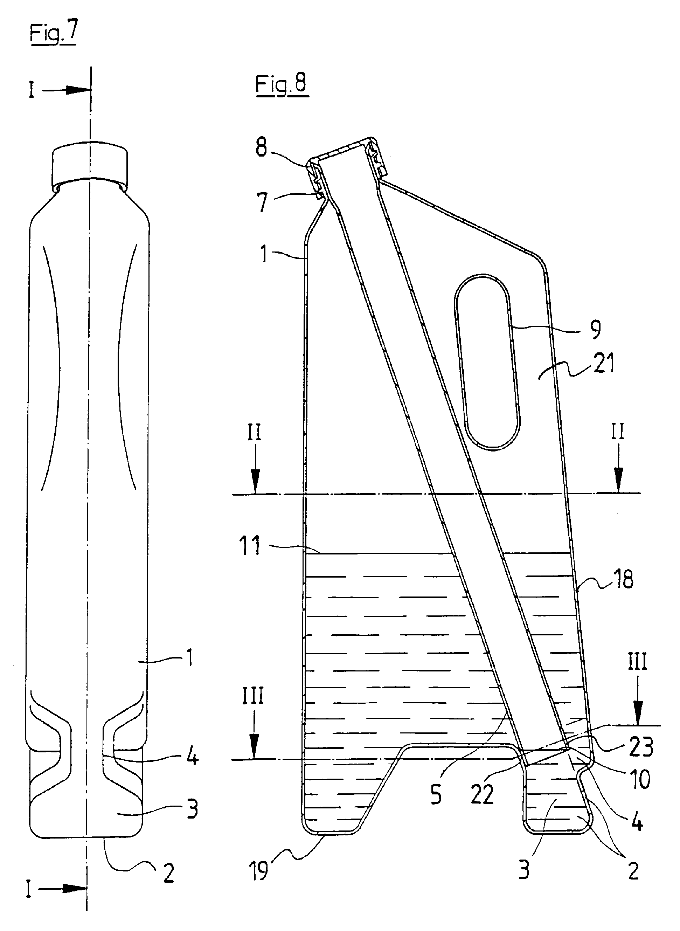

Die Figur 7 zeigt eine alternative Ausführung einer solchen Dosierflasche 1 in einer Ansicht auf die Schmalseite der Flasche. Anstatt die Dosierkammer 3 als liegendes Rohr anzuordnen, ist diese hier von einem gesondert ausgeformten Flaschenboden 2 gebildet., wie das anhand von Figur 8 klar wird.

Die Figur 8 zeigt besser, wie die Dosierkammer 3 realisiert ist. Der Flaschenboden ist im Prinzip in zwei Flaschenfüsse 2,19 ausgeformt, wovon der eine 2 hier die Dosierkammer 3 bildet. Der Ausguss 7 ist schräg auf der gegenüberliegenden Seite der Flasche 1 angeordnet und mit einer Gewindekappe 8 als Deckel dicht verschlossen. Dicht mit dem Ausguss 7 verbunden ist ein Ausgussrohr 5 eingelegt, welches schiefwinklig das Flascheninnere durchmisst und knapp unterhalb des oberen Randes 22 der Dosierkammer 3 mündet. Neben dieser unteren Mündung 23 des Ausgussrohres 5 und der anliegenden Innenwand der Flasche 1 verbleibt ein Freiraum, der als Durchgangsöffnung 4 vom Flascheninhalt zur Dosierkammer 3 dient. Der bei aufrechter Lage der Flasche obere Rand der unteren Mündung des Ausgussrohres 5 definiert das Flüssigkeitsniveau 10 im Ausgussrohr 5. Mehr Flüssigkeit kann nicht durch die Durchgangsöffnung 4 in das Ausgussrohr 5 nachlaufen, weil ja durch das Nachlaufen ein Unterdruck oberhalb des Flüssigkeitsniveaus 11 der Flasche entsteht, welcher dieses verhindert. Gleichzeitig wirkt im Ausgussrohr 5 der Atmosphärendruck einem Niveauanstieg entgegen. Die hier gezeigte Flasche 1 ist wiederum mit einem Griffloch 9 ausgerüstet, sodass ein Griffbügel 21 gebildet ist, wie schon zu Figur 2 beschrieben.

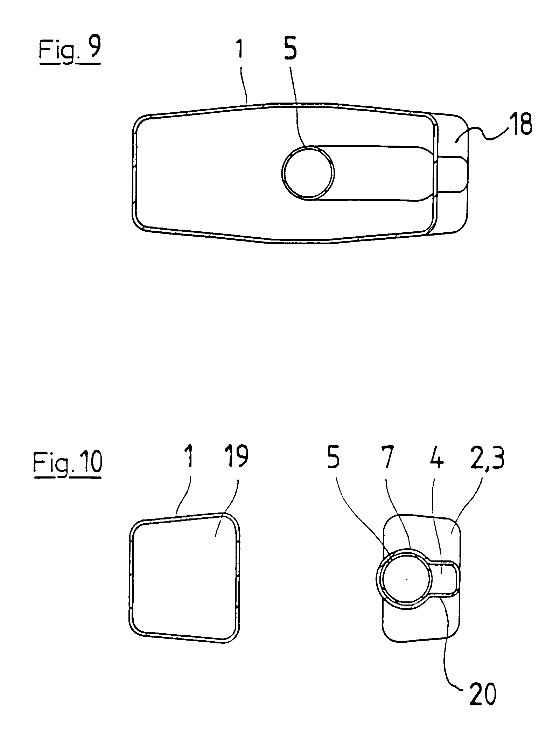

Die Figur 9 zeigt dieselbe Flasche 1 in einem Querschnitt längs der Linie II-II in Figur 8. Man sieht die Flaschenwände sowie das schräg nach oben verlaufende Ausgussrohr 5, sowie auch einen Teil der Aussenwand 18 der Flasche 1, die hier schräg nach aussen verläuft.

Die Figur 10 schliesslich zeigt einen Querschnitt längs der Linie III-III in Figur 8. Zum besseren Verständnis wird sie am besten gemeinsam mit der Figur 8 betrachtet. Vorne an der Flasche befindet sich ein gesonderter Flaschenfuss 19. Der hintere Flaschenfuss 2 bildet die Dosierkammer 3. Wie man sieht, ist die Durchgangsöffnung 4 durch eine Einschnürung 20 der Flaschenwand begrenzt.

Diese Dosierflasche, ob nach den Figuren 1 bis 6 oder 7 bis 10, ist besonders bequem in der Handhabung und für das Vornehmen von Dosierungen. Sie kann mit einer Hand ergriffen werden und braucht zur Vornahme einer Dosierung bloss von der aufrechten in die Ausgiesslage geschwenkt zu werden. Für jede erneute Dosierung braucht sie bloss zunächst zurück in die aufrechte Lage gebracht zu werden, um dann abermals in die Ausgiesslage geschwenkt zu werden. Jeder solche Dosiervorgang endet mit der Spende der immer exakt gleich grossen Fixdosierung, bis die Flasche nahezu vollständig entleert ist. Nur die allerletzte Dosierung weist nicht unbedingt den genauen Dosierkammerinhalt auf. Die Flasche kann ausserdem sehr kostengünstig im Extrudier-Blasverfahren in PE hergestellt werden.

Eine solche Dosierflasche findet vorallem Anwendung im Haushaltbereich, wo jetzt noch Flüssigkeiten umständlich mit Messbecher, Pumpflaschen usw. dosiert werden. Da die Flasche kostengünstig ist, eignet sie sich besonders als Einwegflasche.

## Patentansprüche

1. Dosierflasche für Fixdosierungen, dadurch gekennzeichnet, dass die Flasche (1) einstückig aus Kunststoff im Blas- oder Spritzverfahren herstellbar ist, wobei mittels ein oder mehrerer Quetschnähte (6) oder mittels einer Einschnürung der Flaschenwand eine am Flaschenboden angeordnete Dosierkammer (3) mit Durchgangsöffnung (4) zum Flascheninnern abgetrennt ist, welche mit einem Ausgussrohr (5) kommunziert, das im Flascheninnern zum Ausguss (7) führt, derart, dass bei jedem Kippen der Flasche aus der aufrechten Lage um 90°bis 180° in eine Ausgiesslage einzig der Inhalt der Dosierkammer (3) ausgiessbar ist.

2. Dosierflasche nach Anspruch 1, dadurch gekennzeichnet, dass mittels ein oder mehrerer Quetschnähte (6) in ihrem Innern eine sich längs des Flaschenbodens (2) erstreckende Dosierkammer (3) abgetrennt ist, welche auf einer Seite in ein aufsteigendes Ausgussrohr (5) übergeht, welches mit dem Ausguss (7) kommuniziert, und die auf ihrer anderen Seite oben eine Dosierkammeröffnung (4) aufweist, über welche die Dosierkammer (3) in aufrechter Lage der Flasche nachfüllbar ist.

3. Dosierflasche nach Anspruch 1, dadurch gekennzeichnet, dass mittels einer einzigen Quetschnaht (6) in ihrem Innern eine sich längs des Flaschenbodens (2) erstreckende Dosierkammer (3) sowie ein auf einer Seite der Flasche aufsteigendes, mit der Dosierkammer (3) auf deren einen Seite kommunizierendes Ausgussrohr (5) abgetrennt ist, welches mit dem Ausguss (7) kommuniziert, wobei die Dosierkammer (3) und ihrer anderen Seite oben eine Dosierkammeröffnung (4) aufweist, über welche die Dosierkammer (3) in aufrechter Lage der Flasche nachfüllbar ist.

4. Dosierflasche nach Anspruch 1, dadurch gekennzeichnet, dass mittels einer Einschnürung der Flaschenwand der Flaschenboden in zwei Flaschenfüsse (2,19) ausgeformt ist, wovon der eine Flaschenfuss (2) mit seinem Innern die Dosierkammer (3) bildet, wobei ein vom Ausguss (7) aus schräg im Flascheninnern verlaufendes Ausgussrohr (5) unterhalb des oberen Randes (22) der so gebildeten Dosierkammer (3) mündet und der Raum zwischen der unteren Rohrmündung (23) und der Flascheninnenwand die Durchgangsöffnung (4) zur Dosierkammer (3) bildet, sodass bei jedem Kippen der Flasche (1) aus der aufrechten Lage um 90°bis 180° in die Ausgiesslage einzig der Inhalt der Dosierkammer (3) ausgiessbar ist.

5. Dosierflasche nach einem der vorhergehenden Ansprüche, dadurch gekennzeichnet, dass die Flasche (1) eine separate Einfüllöffnung (12) aufweist, die mit einem Verschlussdeckel (13) verschliessbar ist.

6. Dosierflasche nach einem der Ansprüche 1 bis 4, dadurch gekennzeichnet, dass die Flasche (1) auf ihrer Oberseite nebem dem Ausguss (7) eine verschliessbare Entlüftungsöffnung (14) aufweist.

7. Dosierflasche nach einem der vorhergehenden Ansprüche, dadurch gekennzeichnet, dass die Flasche (1) eine Grifföffnung (9) aufweist, sodass ein Griffbügel (21) gebildet ist, an dem die Flasche (1) einhändig kippbar ist.
